# EUROPEAN PATENT APPLICATION

(11) **EP 1 521 193 A2**
(43) Date of publication of application: **06.04.2005**
(21) Application number: 04007778.6
(22) Date of filing: 31.03.2004
(51) Int. Cl.: G06F 17/60

(54) **Recycle support apparatus**

(30) Priority: 30.09.2003 JP 2003340610
(71) Applicant: FUJITSU LIMITED, Kawasaki-shi, Kanagawa 211-8588 (JP)
(72) Inventor: Sugahara, Yasuo c/o Fujitsu Limited, Kawasaki-shi, Kanagawa 211-8588 (JP); Furuya, Hiroyuki c/o Fujitsu Limited, Kawasaki-shi, Kanagawa 211-8588 (JP); Yoshida, Seiji, Mashiki-machi Kamimashiki-gun Kumamoto (JP)
(74) Representative: Kreutzer, Ulrich, Dipl.-Phys.

(57) **Abstract**

When an application procedure starts, a user is requested to specify equipment to be discarded. When the equipment to be discarded is specified, it is determined whether or not the standards for a weight and a size of a distribution company who transfers the equipment to be discarded from the user are exceeded. Then, it is determined whether or not the processing cost has already been paid, or whether the payment is to be made by transfer, using a credit card, etc. Then personal information is input, and settling means is practically specified, thereby terminating the application for recycling a PC from the user.

## Description

### Background of the Invention

### Field of the Invention

The present invention relates to a recycle system for supporting the procedure of reclaiming for a recycled use of a product such as a personal computer, etc.

### Description of the Related Art

Lately, the production of materials has made amazing progress while the environment has become a victim of the progress. As a result, the recovery of the environment has been clamored for. Conventionally, producing products has been the first objective while the refuse has been either left as stacks of garbage or incinerated. However, the left refuse has become an environmental pollutant, destroyed ecosystems, and the chlorofluorocarbon discharged from discarded refrigerators and the gases generated from incinerated refuse have not only had harmful effects on people, but also incurred the global warming and the destruction of ozone by greenhouse gases, etc.

In response to this growing problem, Japan has enforced the Resource Effective Use Advancement Law revised on April 7, 2003 to have a responsibility for a manufacturer to reclaim personal computers and their display devices (hereinafter referred to as a PC) discarded as general domestic garbage for recycled use. A manufacturer receives a request for reclamation of a PC from a user, and executes a procedure for reclamation. The request is received by phone or through a WEB page over the Internet. The reclamation is performed by a package delivery company, etc. A user who discards a PC first files an application with a manufacturer, applies to the PC a slip of a package delivery company mailed to the user, and then brings it to a distribution center or has the PC taken to the distribution center after making a pickup request to the distribution center.

To use a package delivery company for reclamation, use restrictions (up to 20 kg, etc.) specific to each package delivery company are applied to the weight and the size of a package. Since a PC exceeding restriction standards cannot normally be reclaimed, it is necessary to ask another package delivery company. A user who requests to discard his or her PC often brings it to the distribution center of a package delivery company or makes a pickup request to the package delivery company without knowing the above restrictions, and unfortunately is rejected. Therefore, a manufacturer who receives a request has to determine whether or not each PC to be discarded is in accordance with the standards of the package delivery company requested to reclaim the PC.

### Summary of the Invention

The present invention aims at providing an apparatus for supporting the recycle system which allows a manufacturer to easily reclaim a personal computer and its display device from a user.

The support apparatus according to the present invention supports the recycling of the equipment of a user, and includes an information obtaining unit for obtaining equipment information about the equipment to be received from the user, and a determination unit for determining according to the information obtained by the information obtaining unit whether or not the treatable articles restriction standards of a receiver of the equipment are exceeded.

According to the present invention, the recycle system determines whether or not a reclaimer can handle a PC, etc. to be reclaimed from a user by determining the weight and the size of the equipment to be discarded based on the type, product name, shape, etc. Especially, since a user is not requested to measure the weight or the size of a equipment to be discarded, the user is free of measuring the PC, etc. to be discarded, thereby realizing a convenient recycling process.

According to the effect of the present invention, a user who applies for recycling a PC can be informed whether or not a specified piece of equipment to be discarded is within the standards of the package delivery company when an application is filed. Therefore, the user can receive an appropriate guide to the subsequent procedure (packing, bringing a package to a distribution center, etc.). Furthermore, the office of the manufacturer who receives an application can take appropriate action with the applicant and the distribution company.

### Brief Description of the Drawings

FIG. 1 is a flowchart of the process of applying for the discard of a PC according to an embodiment of the present invention;
FIG. 2 is a block diagram of the system according to an embodiment of the present invention;
FIG. 3 shows an example of the configuration and an example of the data of the database according to an embodiment of the present invention;
FIG. 4 is an explanatory view of the method of determining the presence/absence of a value exceeding the standard by specifying a shape;
FIG. 5 is a detailed flowchart of detecting a value exceeding the standard in a part of an applying process;
FIG. 6 is a detailed flowchart for determining a processing cost of a part of an applying process;
FIG. 7 is an explanatory view of the changes of the screen of the WEB contents of an application for recycling a PC;
FIG. 8 shows the outline of the operation on a management end;
FIG. 9 is a flowchart of the process of determining to which plant a PC to be recycled is to be transmitted; and
FIG. 10 shows an example of a plant master.

### Description of the Preferred Embodiments

Described below is an example of a recycle system to which the support apparatus according to the present invention is applied.

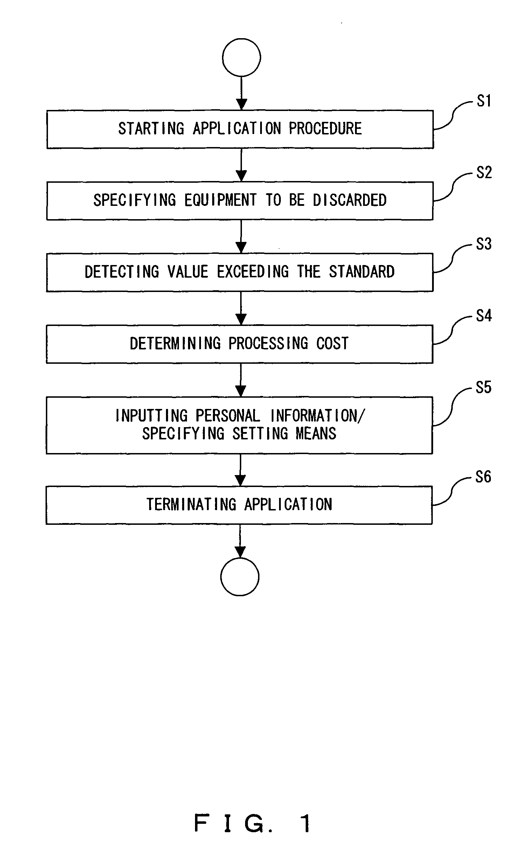

FIG. 1 is a flowchart of an applying process of discarding a PC according to an embodiment of the present invention.

First, in step S1, an application procedure starts. In step S2, equipment to be discarded is specified. In step S3, a value exceeding the standard is detected. That is, it is determined whether or not the equipment to be discarded exceeds the standards for weight or size of the company who receives the equipment to be discarded. If it exceeds the standards, another company is to be selected. In step S4, a processing cost is determined. In this process, when a charge for receiving is prepaid when the PC is purchased, a seal is applied to the PC. Therefore, the determination can be made based on the seal. That is, if the seal is applied, then no commission for receiving is collected because the charge for receiving has already been paid. Although the seal is not applied to a PC when the PC is purchased, when an application for recycle is made, a seal can be obtained, and the seal is applied to the PC. In this case, the charge for receiving is prepaid. When no seal is applied and the charge for receiving is not prepaid, the charge is presented to a user. In step S5, personal information is input, and a settling method is specified. In step S6, the application procedure is completed.

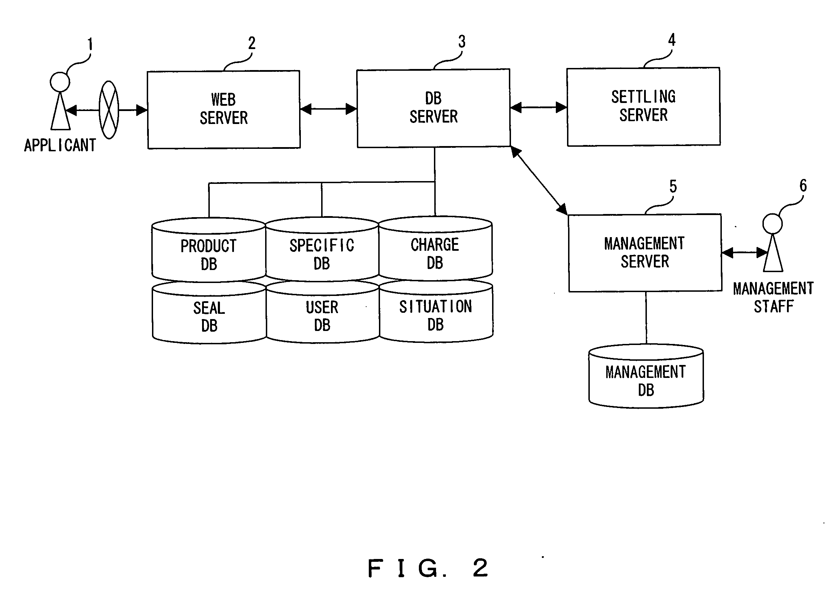

FIG. 2 is a block diagram of the system according to an embodiment of the present invention.

In FIG. 2, an application for recycling a PC is received through the WEB. A user (1) who applies for recycling a PC accesses a WEB server (2) from a browser through the Internet, and performs an operation. A database (DB) server (3) manages a necessary database, provides information for a WEB server (2), and generates application data. A settling server (4) performs a charge settling process (crediting for a credit card) for an application charge. A management server (5) receives application data, and performs the subsequent procedure. A management staff (6) operates the management server (5), and accepts the application and manages the progress. The product database holds the model name, the product name, etc. of a PC product to be recycled, and is used in specifying equipment to be recycled. A specific database holds the model name of a product which exceeds the standards for accepting a pickup request (weight, etc.) of a package delivery company, and uses it in determining a value exceeding the standard. A charge database holds a charge for reclaiming and recycling for each shape, and is used in determining a charge. A seal database holds personal information and recorded model information, and is used in determining the presence/absence of a seal. A situation database holds the progress of a recycling process transmitted from the management server, and is used in transmitting the progress to a user. A management database holds application data, and is used in a recycling process.

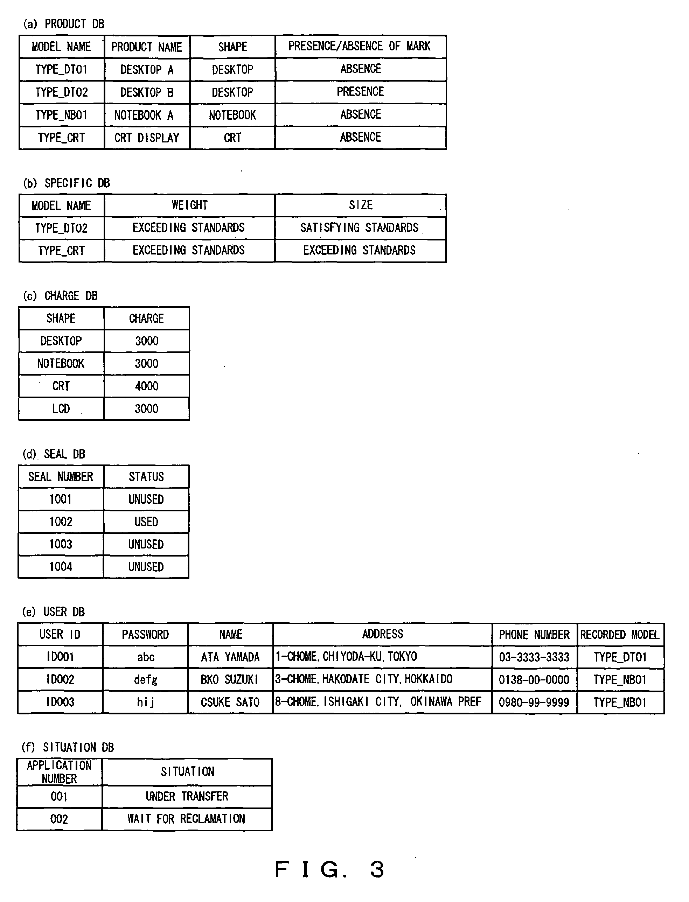

FIG. 3 shows an example of the configuration and an example of the data of the database according to an embodiment of the present invention.

In the product database of (a) shown in FIG. 3, the model name, the product name, and the shape of a product, and the presence/absence of a mark are recorded. A model name is the name of the model assigned by a manufacturer to a product. A product name is an article name of a product. A shape is the type of a product such as a desktop, a notebook, a display of a CRT, etc. The presence/absence of a mark indicates whether or not a charge for receiving a product to be recycled has been paid for a product. It has almost the same effect as the seal. However, a seal indicates that the use rate has been paid after the product is purchased while a mark indicates that the charge for receiving is included in the price of the product.

The weight and size are described depending on the model name in the specific database indicated by (b) shown in FIG. 3. Especially, the weight is recorded as to whether or not it exceeds a weight restriction of a package delivery company in charge of receiving a PC to be recycled. The size is recorded as to whether or not it exceeds a size restriction of a package delivery company.

The charge database indicated by (c) shown in FIG. 3 records the shape as the type of a personal computer such as a desktop, a notebook, a CRT display, an LCD display, etc., and records the charge for each type.

The seal database indicated by (d) shown in FIG. 3 records depending on the seal number on the seal whether or not the receiving service for the charge for receiving has been performed.

In the user database indicated by (e) shown in FIG. 3, user entry information is entered. In the user database, a user ID, a password, a name, an address, a phone number, and an entered type are recorded.

In the situation database indicated by (f) shown in FIG. 3, an application number and the corresponding situation are recorded.

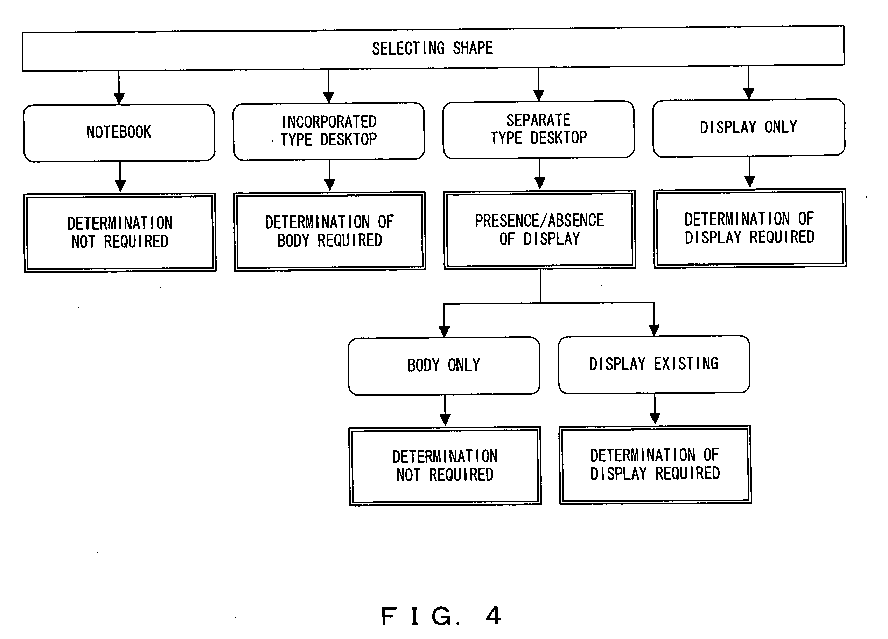

FIG. 4 is an explanatory view of determining the presence/absence of a value exceeding the standard by specifying a shape.

Retrieval by model name ..... The weights and the package sizes of all articles to be received as targets to be discarded are measured in advance, and all "model names" of articles which possibly exceed the standards are listed. This list is referred to as a "specific model name list". When an application for recycle is made, and when an applicant specifies the model name, the model name is retrieved from the "specific model name list". If the model name is detected, the information is transmitted to the applicant, the guide to the procedure (not to bring the PC to the distribution center, etc.) is given to the applicant, and the data is also recorded in the application information, thereby allowing the office for receiving the application to take appropriate action (requesting a distribution company to take individual action, etc.). The means for specifying the model name can be a method of directly inputting data, a method of selecting an item from a list, a method of obtaining it from user entry information (user equipment information recorded in the user database of a manufacturer), etc.

Retrieval by product name ..... When the "model name" is not clear, an article can be specified as equipment to be discarded using the "product name" as a key. In this case, if the information about the "product name" is recorded in the "specific model name list", then a value exceeding the standard can be determined. Otherwise, a list for association between all "model names" and "product names" of the articles to be received as targets to be discarded is prepared so that the model name information can be obtained from the product name information specified when an application for recycle is made, thereby retrieving the model name from the "specific model name list".

Support by specifying a shape ..... When a value exceeding the standard is not determined in the above-mentioned methods, the method shown in FIG. 4 is used. Most desktop personal computers have their bodies separate from their display monitors, and both bodies and display monitors are to be reclaimed for recycle. If it is requested that the body and the display are to be packed separately, then the determination of a value exceeding the standard is to be performed separately for the body and the display. Various shapes are applied to PCs, but the possible shapes for a value exceeding the standard are a CRT display, a display incorporated PC, etc. which are limited to a small part of the total models. When an application is made, the information about the "shape" such as "desktop PC", "notebook PC", "incorporated PC", "body only", "display only", "body+display", "CRT display", "LCD display", etc. is specified to determine the retrieval of the model name only of the CRT display, etc., from the specific model namelist, thereby efficiently performing the determining process. FIG. 4 shows an example of the method of selecting the determination target depending on the type of a body and the presence/absence of a display. In this example, a display and a display incorporated desktop are determination targets.

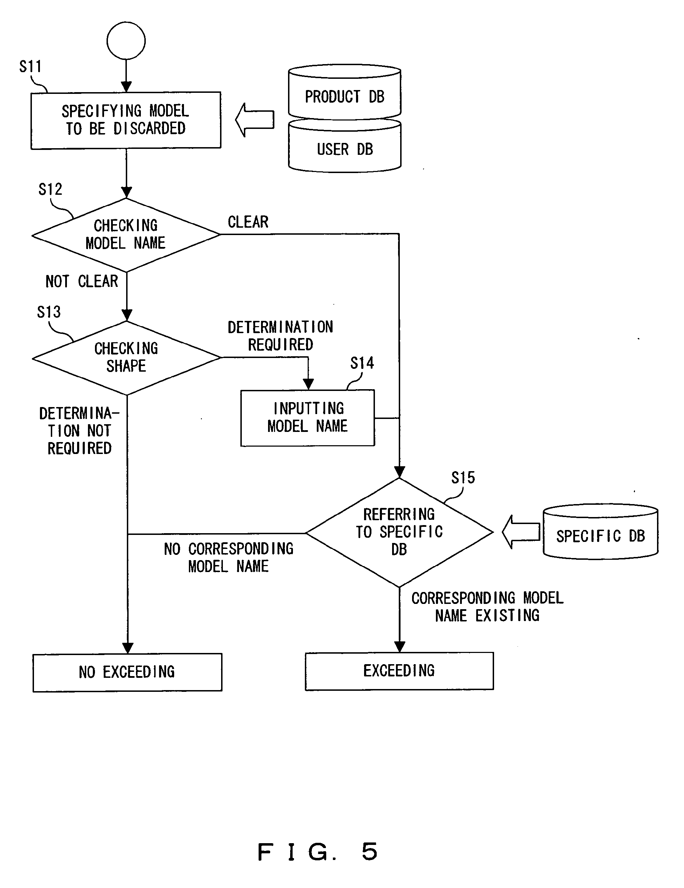

FIG. 5 is a detailed flowchart of detecting the value exceeding the standard of a part of an application process.

In step S11, the model to be discarded is selected, and the model name and the shape of a model to be discarded are specified by referring to the product database and the user database. In this example, it is determined in step S12 whether or not the model name is correctly specified. If the model name is clearly stated, control is passed to step S15. If the model name is not clear, control is passed to step S13. If it is determined in step S13 that no determination is required, then it is determined that there is no value exceeding the standard. If it is determined that determination is to be performed, then control is passed to step S14. In step S14, a prompt to input a model name is issued. If the model name is determined, then control is passed to step S15. In step S15, it is checked whether or not there is a corresponding model name by comparing the model name with the specific database. If there is a corresponding model name, it is determined that there is a value exceeding the standard. If there is no corresponding model name, it is determined that there is no value exceeding the standard.

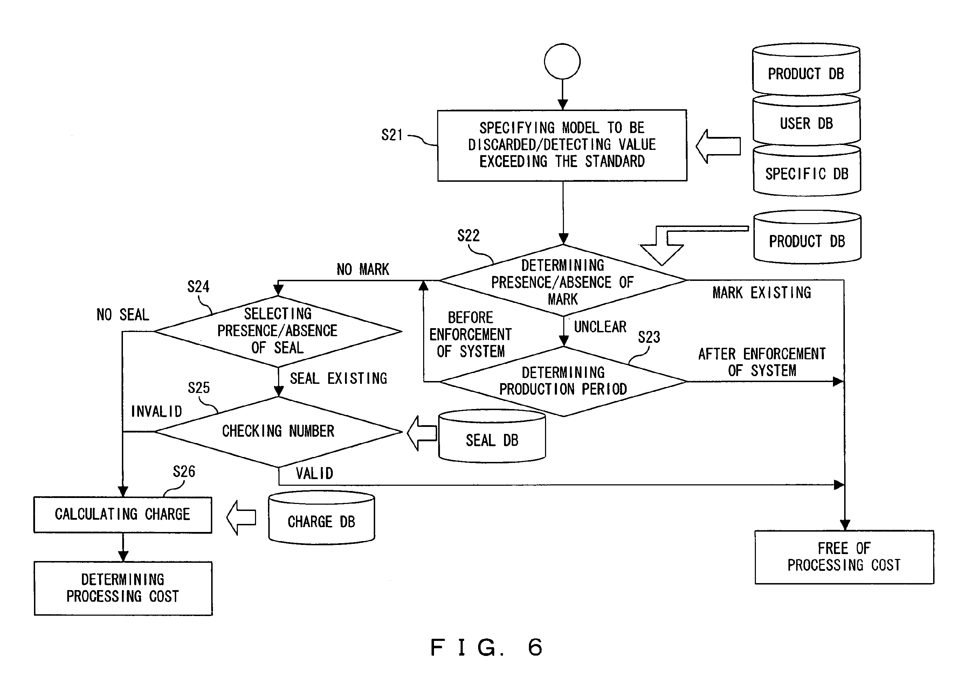

FIG. 6 is a detailed flowchart of determining a processing cost of a part of the applying process.

In step S21, a model to be discarded is specified, and it is determined whether or not there is a value exceeding the standard. In step S22, it is determined whether or not a recycle mark is applied to a specified model to be discarded. The determination is made by referring to a product database using the specified model name as a key. When it is determined that there is a mark, it is determined that the charge for a recycling process for the product is free (it is determined that the charge has already been prepaid). If it is not clear whether or not there is a mark, then control is passed to step S23. If it is determined that there is not mark, then control is passed to step S24. In step S23, the production period of the model to be discarded is determined, and the production period is specified using the production number, etc. of a model as a key. If the production period is after the start of the enforcement of the PC recycle system, then it is determined that there is a mark, and the charge for a recycling process is free. If the production period is before the start of the enforcement of the PC recycle system, then it is determined that there is no mark, and control is passed to step S24. In step S24, the applicant is allowed to select the presence/absence of the recycle mark seal. If the answer is the presence of a seal, then control is passed to step S25. If the answer is the absence of a seal, then control is passed to step S26. In step S25, a prompt to input the number printed on the seal is issued, and the contents are checked. It is determined whether or not the seal number is valid by referring to the seal database using the input number as a key. If it is determined that the number is valid, it is determined that the charge for a recycling process is free. If it is determined that the number is invalid, then control is passed to step S26. In step S26, the charge for a recycling process is determined, and the charge is calculated by referring to the charge database using the shape of the model to be discarded as a key, thereby determining the charge for a recycling process.

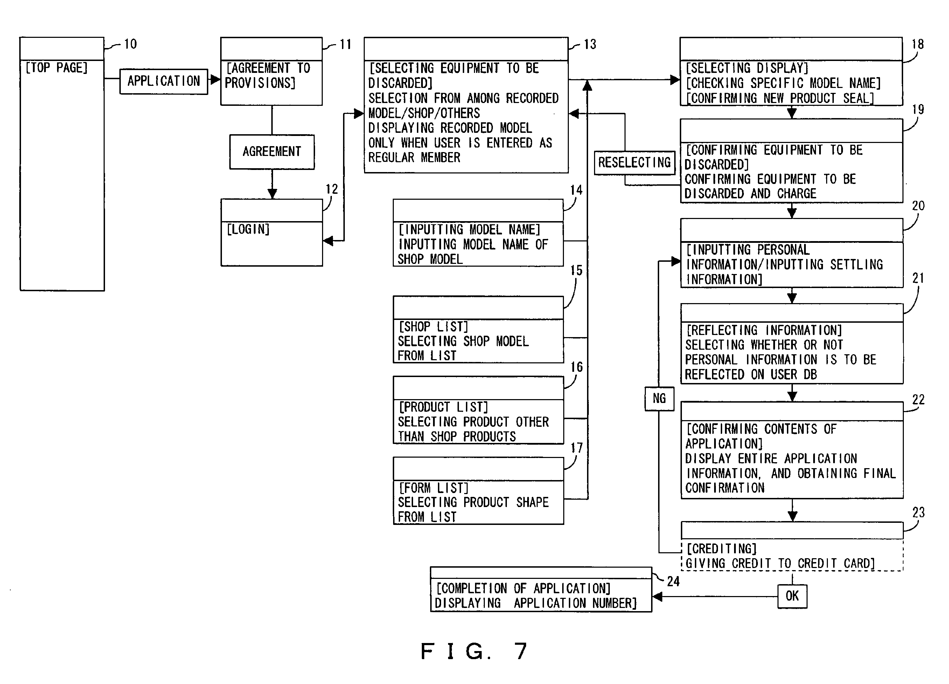

FIG. 7 is an explanatory view of the changes of the screen of the WEB contents of the application for recycling a PC.

First, the user accesses a top page 10 of the WEB contents. Since a guide to an application is encountered, an application is selected. Then, a screen 11 as to whether or not the provisions are agreed to is displayed. When the provisions are agreed to, a login screen 12 is displayed. When a user logs into the system, control is passed to a discarded model selection screen 13. On this screen, selection items are an entered model, a shop, and others. The selection by an entered equipment is displayed only when the user is a regular member of the present system. In selecting equipment to be discarded, a model name input screen 14, a shop list screen 15, a product list screen 16, and a shape list screen 17 are displayed. On each screen, a model name is input from a shop model, a shop model is selected from a list, a product in other than shops is selected from a list, and a product shape is selected from a list. Then control is passed to a display selection screen 18. On this screen, a special model name is checked, and a new product seal is checked. Then, a discarded equipment confirmation screen 19 is displayed. At this time, control can be returned to the discarded model selection screen 13 and the user can also reselect it. If the equipment to be discarded is checked, control is passed to a personal information/settling information input screen 20. On an information reflection screen 21, it is selected whether or not the personal information is to be reflected on the user database. On an application contents confirmation screen 22, an application information is totally displayed, and is finally confirmed. On a crediting screen 23, a crediting process is performed for a credit card. If a negative result is output, control is returned to the personal information/settling information input screen 20. If credit is given to a credit card, an application number is displayed on an application completion screen 24, and the application terminates. In FIG. 7, the charge for recycle is paid using a credit card, but a payment in cash is allowed. In this case, the receiving process is held until the payment in cash by the user can be confirmed. The payment in cash is made by a user using a payment form recording an identification number. The payment can be made through an ATM, or in a bank, a post office, a convenience store, etc.

Described above is the operations on the user end on which an application for a recycle system is made. Described below is the operations on the management end on which the management of the recycle by the recycle system is performed.

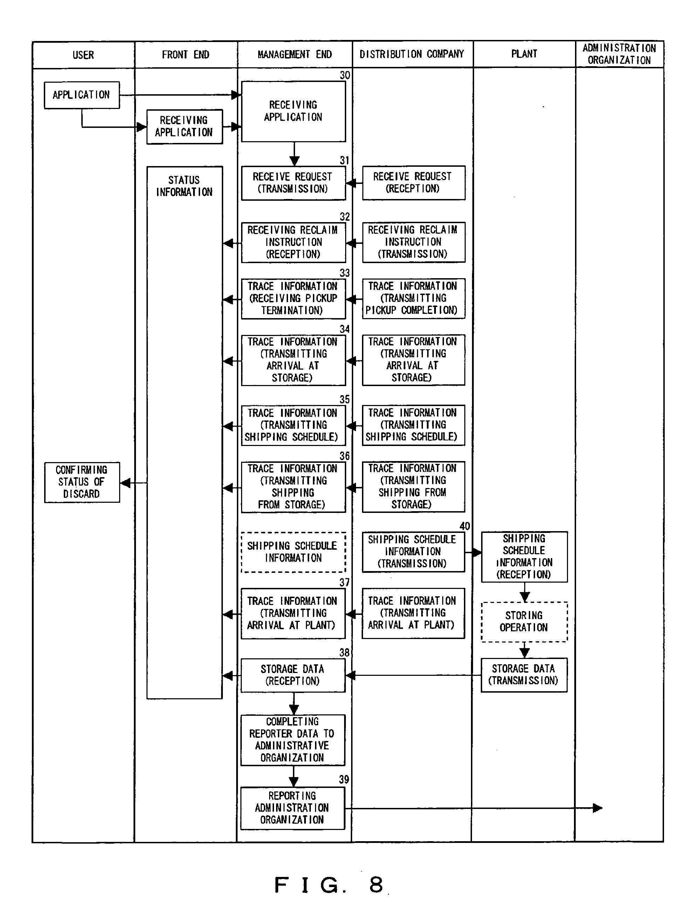

FIG. 8 shows the outline of the operations of the management end.

Upon receipt of an application for recycle from a user through the above-mentioned system, the information is accepted by the management end of the system. From the management end, a receive request is transmitted to a distribution company (package delivery company). Upon receipt of the receive request, the distribution company transmits the acceptance of a reclaim instruction to the management end. Upon receipt of the acceptance, the management end transmits the status information to the front end. The distribution company transmits as trace information the report of completion of pickup 33, arrival at storage 34, shipping schedule 35, and shipment from storage 36 to the management end, and the front end receives them as status information. The management end stores the information as shipping schedule information. The distribution company transmits shipping schedule information to a plant for recycling a PC (40). When the distribution company ships a PC to be recycled, the plant performs a storing operation. The distribution company transmits an arrival report of the PC at the plant to the management end as trace information. The management end transmits trace information 37 to the front end to allow the user to see the information. when the plant finished the storing operation, storage data is transmitted to the management end (38). and it is transmitted to the front end as status information. Thus, the status information transmitted to the front end can be seen by the user, and the user can confirm the discard status. Upon receipt of storage data 38, the management end completes the reporter data to an administrative organization (39).

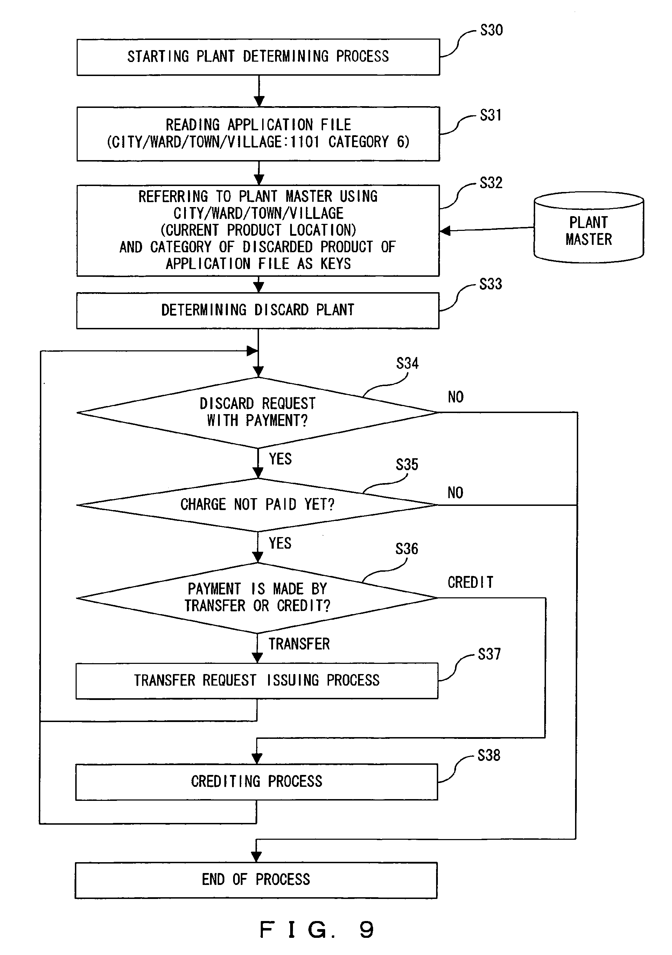

FIG. 9 is a flowchart of the process of determining to which plant a PC to be recycled is to be transmitted.

In step S30, a plant determining process is started. In step S31, an application file is read. In the application file, the contents of an application for recycle from the user are described. Especially, a city/ward/town/village in which the received PC is located, the category of the PC, etc. are referred to. In step S32, a plant master is referred to using the city/ward/town/village (location of the received PC) of the application file and the category of the received PC (discarded object) as keys. The plant master stores which plant processes a discarded object in which area. In step S33, a destination plant is determined. In step S34, it is determined whether or not a discard request is on the basis of payment. If the determination is NO in step S34, then the process terminates. If the determination is YES in step S34, then it is determined in step S35 whether or not the charge has not been paid. If the determination in step S35 is NO, then the process terminates. If the determination in step S35 is YES, then it is determined whether the payment is made by transfer or on credit. If the determination in step S36 is a transfer, then a transfer request is issued to the management end in step S37, and control is returned to step S34. If the determination in step S36 is credit, the crediting process is performed in step S38. Then, control is returned to step S34.

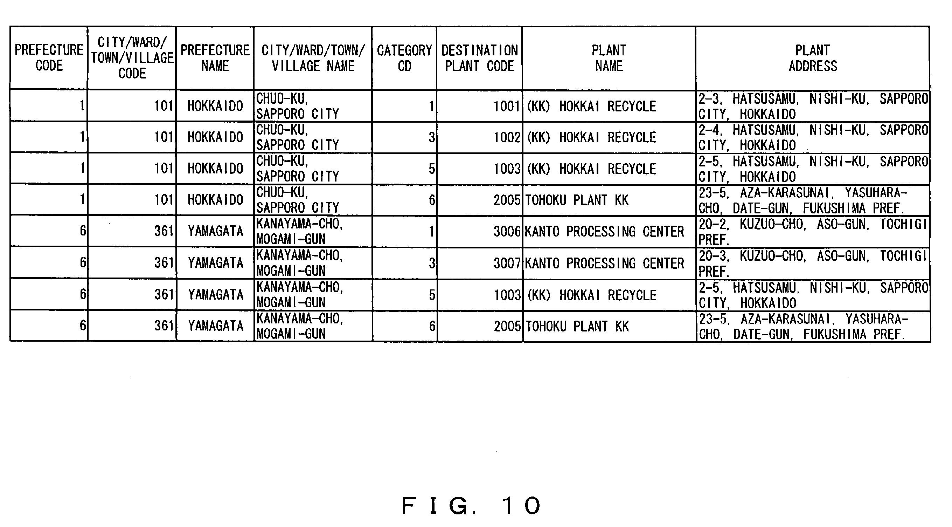

FIG. 10 shows an example of a plant master.

In the plant master, a destination plant code, the name of a plant, the address of a plant are entered corresponding to the prefecture code, the city/ward/town/village code, the name of prefecture, the name of city/ward/town/village, and the category code. The location of the PC to be discarded is determined based on the prefecture code, the city/ward/town/village code, the name of prefecture, the name of city/ward/town/village, and the type of the PC to be discarded is determined by a category code. Thus, the plant to which the PC to be discarded is to be taken to can be determined.

## Claims

1. A support apparatus for supporting recycled use of equipment of a user, comprising:
information obtaining means for obtaining equipment information about the equipment to be received from the user; and
determination means for determining according to information obtained by said information obtaining means whether or not treatable articles restriction standards of a receiver of the equipment are exceeded.

2. The apparatus according to claim 1, further comprising:
charge determination means for determining whether or not a user is to bear a charge for recycle.

3. The apparatus according to claim 2, further comprising:
payment method determination means for determining a method of paying a charge when said charge determination means determines that a user is to pay a charge.

4. The apparatus according to claim 2, further comprising:
calculation means for calculating the charge according to information obtained by said information obtaining means.

5. The apparatus according to claim 3, wherein
when said charge determination means determines that a user is to pay a charge, the apparatus first confirms a payment of the charge by the user, and then performs a receiving process.

6. The apparatus according to claim 1, wherein
said information obtaining means obtains information from a user over a network.

7. The apparatus according to claim 1, further comprising:
location management means for managing a location and a type of the received equipment; and
plant determination means for determining a plant which processes the equipment based on the location and the type of the equipment.

8. The apparatus according to claim 1, further comprising:
progress information generation means for generating information about progress of recycling equipment.

9. A program used to direct a computer to function as:
information obtaining means for obtaining equipment information about the equipment to be received from the user; and
determination means for determining according to information obtained by said information obtaining means whether or not treatable articles restriction standards of a receiver of the equipment are exceeded.

10. The program according to claim 9, further comprising:
charge determination means for determining whether or not a user is to bear a charge for recycle.

11. The program according to claim 10, further comprising:
payment method determination means for determining a method of paying a charge when said charge determination means determines that a user is to pay a charge.

12. The program according to claim 10, further comprising:
calculation means for calculating the charge according to information obtained by said information obtaining means.

13. The program according to claim 11, wherein
when said charge determination means determines that a user is to pay a charge, the computer first confirms a payment of the charge by the user, and then performs a receiving process.

14. The program according to claim 9, wherein
said information obtaining means obtains information from a user over a network.

15. The program according to claim 9, further comprising:
location management means for managing a location and a type of the received equipment; and
plant determination means for determining a plant which processes the equipment based on the location and the type of the equipment.

16. A supporting method of supporting recycled use of equipment of a user, comprising the steps of:
obtaining equipment information about the equipment to be received from the user; and
determining according to information obtained by said information obtaining step whether or not treatable articles restriction standards of a receiver of the equipment are exceeded.

17. The method according to claim 16, further comprising the steps of:
determining whether or not a user is to bear a charge for recycle.

18. The method according to claim 17, further comprising the steps of:
determining a method of paying a charge when said charge determination step determines that a user is to pay a charge.

19. The method according to claim 17, further comprising the steps of:
calculating the charge according to information obtained by said information obtaining step.

20. The method according to claim 18, wherein
when said charge determination step determines that a user is to pay a charge, a payment of the charge by the user is first confirmed , and then a receiving process is performed.

21. The method according to claim 16, wherein
said information obtaining step obtains information from a user over a network.

22. The method according to claim 16, further comprising the steps of:
managing a location and a type of the received equipment; and
determining a plant which processes the equipment based on the location and the type of the equipment.
